# EUROPÄISCHE PATENTSCHRIFT

(11) **EP 1 163 138 B1**
(45) Veröffentlichungstag und Bekanntmachung des Hinweises auf die Patenterteilung: **14.05.2003**
(21) Anmeldenummer: 99915699.5
(22) Anmeldetag: 24.03.1999
(51) Int. Cl.: B60T 8/48, B60T 8/24, B60T 8/36, F16K 39/02

(54) **BLOCKIERGESCHÜTZTE BREMSANLAGE**
Anti-lock braking system
Système de freinage antiblocage

(43) Veröffentlichungstag der Anmeldung: 19.12.2001
(73) Patentinhaber: LUCAS INDUSTRIES PUBLIC LIMITED COMPANY, Solihull B90 4LA (GB); Varity GmbH, 56070 Koblenz (DE)
(72) Erfinder: GEGALSKI, Helmut, D-56218 Mühlheim-Kärlich (DE); WALD, Thomas, D-56288 Holnich (DE)
(74) Vertreter: Schmidt, Steffen J., Dipl.-Ing.
(86) Internationale Anmeldenummer: EP9902000
(87) Internationale Veröffentlichungsnummer: WO00056586

(56) Entgegenhaltungen:
- WO-A-96/15926
- WO-A-97/06040
- WO-A-97/07002
- WO-A-98/13242
- WO-A-98/57834
- DE-A- 4 035 527
- DE-A- 19 530 899
- DE-B- 1 235 087
- FR-A- 2 615 585
- US-A- 3 447 568
- US-A- 3 575 213

## Beschreibung

### Hintergrund der Erfindung

Die Erfindung betrifft eine blockiergeschützte Bremsanlage, die insbesondere zur Antriebsschlupf- sowie zur Fahrdynamikregelung eingerichtet ist, mit einer Pumpe zum Betätigen einer Radbremse, die Bremsfluid gesteuert von einer Bremsdruckgebereinheit entnimmt und der Radbremse zuführt.

### Stand der Technik

Aus der DE 40 35 527 A1 ist es bekannt, zwischen der Eingangsseite der Pumpe und der Bremsdruckgebereinheit ein 2 Stellungs-/2 Positionsventil vorzusehen. Diese Ventilanordnung hat nur eine Betätigungs- bzw. Verbindungsstellung. Dabei muß der Strömungsquerschnitt dieser einen Betätigungs- bzw. Verbindungsstellung sehr groß bemessen sein, damit beim Eintritt in die Fahrstabilitätsregelung über die Pumpe ein schneller Druckaufbau in der Radbremse erreicht wird, insbesondere um bei niedrigen Temperaturen ein gutes Ansaugverhalten (hohe Pumpleistung) der Pumpe zu erreichen. Ein großer Strömungsquerschnitt bringt jedoch als Nachteile starke hydraulische Strömungsgeräusche und heftige Pedalrückwirkungen mit sich, was als störend und wenig komfortabel empfunden wird.

Eine derartige Ventilanordnung ist als sogenanntes "Normal-Closed" (NC)-Ventil bekannt. Im unbetätigten Zustand, also der Grund- bzw. Normalstellung, ist die Strömungsverbindung zwischen den Fluidanschlüssen der Ventilanordnung gesperrt, wogegen im betätigten Zustand die Strömungsverbindung zwischen den Fluidanschlüssen hergestellt ist. Damit im unbetätigten Zustand die Strömungsverbindung zwischen den Fluidanschlüssen gesperrt ist, ist ein Ventilglied unter Einwirkung einer Federanordnung vorgespannt, so daß dieses an einem Dichtsitz abdichtend zur Anlage kommt. Um im betätigten Zustand die Strömungsverbindung zwischen den Fluidanschlüssen herzustellen, ist es erforderlich, daß die Betätigungseinrichtung eine Kraft aufbringt, die zumindest die Vorspannkraft der Federanordnung zu überwinden vermag, so daß das Ventilglied von dem Dichtsitz abhebt.

Allerdings ist es in den meisten Anwendungsfällen nicht ausreichend, wenn die Betätigungseinrichtung eine Kraft aufbringt, die nur geringfügig größer ist als die Vorspannkraft der Federanordnung, da im Betrieb an den Fluidanschlüssen der Ventilanordnung unterschiedliche Fluiddrücke auftreten, wodurch auf das Ventilglied zusätzlich eine Druckdifferenzkraft wirkt, die je nach Wirkrichtung der von der Betätigungseinrichtung aufgebrachten Kraft entgegengerichtet ist. Demnach ist die Betätigungseinrichtung so auszulegen, daß die Betätigungskraft größer ist als die Summe aus der Vorspannkraft der Federanordnung und der maximal zu erwartenden Druckdifferenzkraft, um eine sichere Funktion der Ventilanordnung zu gewährleisten. Ein Nachteil dabei ist, daß die Betätigungseinrichtung für eine Vielzahl von Situationen überdimensioniert sein muß, insbesondere dann, wenn wie bei den überwiegenden Verwendungen im betätigten Zustand der Ventilanordnung ein großer Strömungsquerschnitt gefordert ist, um eine Drosselwirkung der Ventilanordnung zu unterbinden. Ein großer Strömungsquerschnitt bedeutet aber zusätzlich eine sehr hohe Druckdifferenzkraft, derzufolge eine hohe Betätigungskraft aufzubringen ist. Dadurch entstehen hohe Kosten und ein hoher Aufwand bei Auslegung der Ventilanordnung. Auch baut die Ventilanordnung dadurch relativ groß.

Die WO97/07002 A, die DE 195 30 899 A, WO97/06040 A, WO 96/15926 A, WO98/13242A und die WO 98/57834 A beschreiben eine blockiergeschützte Bremsanlage, die zur Antriebsschlupf- sowie zur Fahrdynamikregelung eingerichtet ist mit einer Pumpe zum Betätigen einer Radbremse, die Bremsfluid von einer Bremsdruckgebereinheit entnimmt und der Radbremse zuführt, und einer 2-Anschluß-/3-Stellungsventilanordnung, die zwischen der Bremsdruckgebereinheit und einem Eingangsanschluß der Pumpe angeordnet ist, die in einer unbetätigten Grundstellung die Verbindung zwischen der Bremsdruckgebereinheit und dem Eingangsanschluß der Pumpe sperrt, die in einer ersten Betätigungsstellung eine sekundäre Strömungsverbindung zwischen der Bremsdruckgebereinheit und dem Eingangsanschluß der Pumpe herstellt, und die in einer zweiten Betätigungsstellung eine primäre Strömungsverbindung zwischen der Bremsdruckgebereinheit und dem Eingangsanschluß der Pumpe herstellt, wobei die primäre Strömungsverbindung einen größeren Strömungsquerschnitt aufweist als die sekundäre Strömungsverbindung.

Bei jeder Betätigung der Ventilanordnung der WO97/07002 A, der DE 195 30 899 A, WO97/06040 A oder der WO96/15926 A besteht zuerst nur die Sekundäre Strömungsverbindung und anschließend die primäre Strömungsverbindung.

### Der Erfindung zugrundeliegendes Problem

Der Erfindung liegt die Aufgabe zugrunde, eine blockiergeschützte Bremsanlage unter Vermeidung der vorgenannten Nachteile bereitzustellen.

### Erfindungsgemäße Lösung

Zur Lösung der Aufgabe ist erfindungsgemäß die oben genannte blockiergeschützte Bremsanlage, dadurch gekennzeichnet, daß nach einer solchen Betätigung der Ventilanordnung diese durch Einstellen der Betätigungskraft wahlweise entweder in die primäre oder in die sekundäre Strömungsverbindung einstellbar ist.

Alle Nachteile der oben beschriebenen bekannten Anordnung (DE 40 35 527 Al) lassen sich mit der erfindungsgemäßen Lösung, die zusätzlich eine weitere Betätigungsstellung mit einem verringerten Strömungsquerschnitt bereitstellt, vermeiden. Denn dadurch kann der Volumenstrom von der Bremsdruckgebereinheit zur Pumpe präzise dosiert werden. Dies gilt vor allem dann, wenn der Volumenstrom durch gezielten zeitlichen Wechsel zwischen der Grundstellung (1.1) und der ersten Betätigungsstellung (1.2) moduliert wird. Folglich kann während der Regelung des Bremsdruckes in der Radbremse das Druckniveau an der Ausgangsseite der Pumpe nahezu dem Druckniveau in der Radbremse angepaßt werden, wodurch weiterhin hydraulische Geräusche reduziert werden.

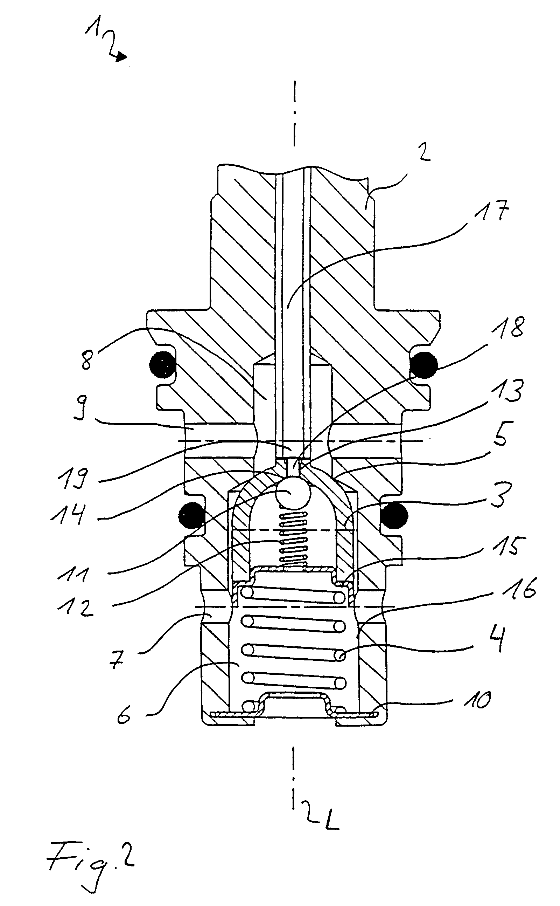

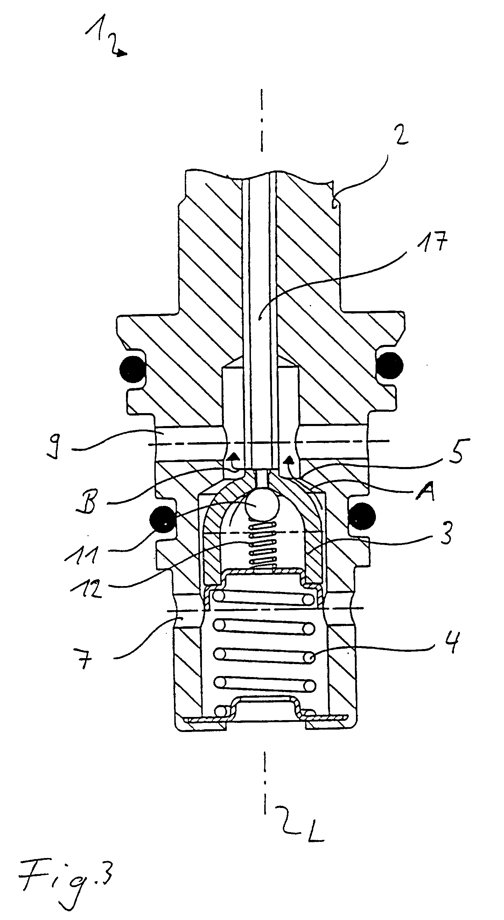

Besonders geeignet zur Verwendung als das zwischen der Bremsdruckgebereinheit 31 und Eingangsseite 42e der Pumpe 42 eingesetzte Zwei/Drei-Wegeventil (1) ist die Ventilanordnung, die in Fig. 2 im unbetätigten und in Fig. 3 im betätigten Zustand dargestellt ist. Für die Anwendung hier wird die Ventilanordnung nun so bestromt,
- daß bei einem ersten Strom zur Herstellung der ersten Betätigungsstellung (1.1) nur das weitere Ventilglied 11 betätigt wird (sekundäre Strömungsverbindung B),
- und daß bei einem zweiten Strom zur Herstellung der zweiten Betätigungsstellung (1.2) weiterhin das Ventilglied 3 betätigt wird (primäre Strömungsverbindung A).

Ein entscheidender Vorteil der erfindungsgemäßen blockiergeschützten Bremsanlage ist, daß bevor die primäre Strömungsverbindung hergestellt wird, zunächst eine sekundäre Strömungsverbindung hergestellt wird. Aufgrund der sekundären Strömungsverbindung wird in dem Fall, daß unterschiedliche Fluiddrücke an den Fluidanschlüssen auf das Ventilglied zusätzlich eine Differenzdruckkraft ausüben, zunächst ein Druckausgleichsvorgang zwischen den Fluidanschlüssen ausgelöst, wodurch die Druckdifferenzkraft eliminiert wird, so daß die Druckdifferenzkraft beim Herstellen der primären Strömungsverbindung nicht mehr wirksam ist und sich nicht mehr nachteilig auswirken kann. Es ist also nur eine verhältnismäßig geringe Betätigungskraft erforderlich, wodurch sich die Betätigungseinrichtung kostengünstig, mit einem geringen Aufwand sowie wenig Einbauraum benötigend ausführen läßt. Dadurch kann der durch die primäre Strömungsverbindung hauptsächlich bestimmte Strömungsquerschnitt verhältnismäßig großzügig dimensioniert werden, um eine unerwünschte Drosselwirkung im Durchströmverhalten der Ventilanordnung auszuschließen. Da die sekundäre Strömungsverbindung im Vergleich zu der primären Strömungsverbindung nur einen geringen Strömungsquerschnitt aufweist, ist die beim Herstellen der zweiten Strömungsverbindung zu überwindende Druckdifferenzkraft vernachläßigbar gering.

### Vorteilhafte Weiterbildungen

Vorzugsweise können die Betätigungseinrichtung und/oder die weitere Betätigungseinrichtung elektromagnetisch und/oder hydraulisch gesteuert werden. So kann in besonderer Weise die Betätigungseinrichtung, die das Ventilglied zur Herstellung der primären Strömungsverbindung betätigt, elektromagnetisch und die weitere Betätigungseinrichtung, die das weitere Ventilglied zur Herstellung der sekundären Strömungsverbindung betätigt, hydraulisch gesteuert werden. Dabei kann die weitere hydraulisch betätigte Betätigungseinrichtung über die zwischen den Fluidanschlüssen bestehende Druckdifferenz gesteuert werden, um die sekundäre Strömungsverbindung zwecks Auslösung des Druckausgleichsvorgangs zwischen den Fluidanschlüssen herzustellen. Wenn nach Eliminierung der Druckdifferenzkraft von der elektromagnetisch betätigten Betätigungseinrichtung die primäre Strömungsverbindung hergestellt wird, ist ebenfalls nur eine verhältnismäßig geringe Betätigungskraft aufzubringen. Dies wirkt sich besonders vorteilhaft auf die Auslegung der Elektromagnetanordnung der Betätigungseinrichtung aus, da die aufzubringende elektromagnetische Kraft verhältnismäßig gering ist, was zum einen eine energiesparende und somit kostengünstige Stromaufnahme bedeutet, und zum anderen eine einbauraumsparende Ausführung der Komponenten des Magnetkreises, vor allem der Spule und des Ankers, möglich macht.

In einer bevorzugten Ausführungsform der Erfindung weist die Ventilanordnung ein erstes Ventilglied auf, das durch eine Federanordnung in die (Grund-)Stellung vorgespannt ist, wobei eine erste Betätigungseinrichtung vorgesehen ist, um das Ventilglied in die erste Betätigungsstellung zu bringen, und ein weiteres Ventilglied vorgesehen ist, das durch eine weitere Federanordnung in die (Grund-)Stellung vorgespannt ist, und durch eine weitere Betätigungseinrichtung in die zweite Betätigungsstellung bringbar ist, so daß bei einer Betätigung der Ventilanordnung zuerst nur die sekundäre Strömungsverbindung und anschließend die primäre Strömungsverbindung besteht.

Gemäß einer bevorzugten Ausführungsform können sowohl das Ventilglied als auch das weitere Ventilglied durch eine gemeinsame Betätigungseinrichtung betätigt werden. Insbesondere kann dabei die gemeinsame Betätigungseinrichtung aufgrund der zuvor dargelegten Vorteile elektromagnetisch gesteuert werden. Dabei kann die Betätigungseinrichtung einen zweistufigen Stößel aufweisen, der in Abhängigkeit von dem die Betätigungseinrichtung bewegenden Anker in einer ersten Stufe nur das weitere Ventilglied betätigt, um zunächst die sekundäre Strömungsverbindung herzustellen, und anschließend in einer zweiten Stufe auch oder nur das Ventilglied zu betätigen, das die primäre Strömungsverbindung herstellt, die das Durchströmverhalten der Ventilanordnung charakterisiert. Weiterhin werden durch die gemeinsame Betätigungseinrichtung eine Betätigungseinrichtung eingespart, demzufolge sich Komponenten und Kosten eingesparen lassen, und sich auch eine kompakte Bauweise der Ventilanordnung ergibt.

In einer besonders bevorzugten Ausführungsform sind das Ventilglied domförmig und das weitere Ventilglied kugelförmig ausgebildet, wobei das weitere Ventilglied innerhalb des Ventilglieds angeordnet ist, wodurch sich die Ventilanordnung besonders einbauraumsparend gestalten läßt.

Vorteilhafterweise ist die Vorspannkraft der Federanordnung größer als die Vorspannkraft der weiteren Federanordnung. Dadurch ist die Betätigungskraft zur Herstellung der sekundären Strömungsverbindung, die von der Vorspannkraft der weiteren Federanordnung abhängt, besonders gering, vor allem wenn unterschiedliche Fluiddrücke an den Fluidanschlüssen anstehen. Außerdem kann sich die weitere Federanordnung über die Federanordnung abstützen, um eine einfache und einbauraumsparende Ausführung der Ventilanordnung zu erzielen.

Unter den Aspekten Einfachheit und Einsparung von Einbauraum ist es von Vorteil, wenn die primäre Strömungsverbindung von einem am Gehäuse der Ventilanordnung ausgestalteten Dichtsitz und dem Ventilglied bestimmt wird. Selbiges gilt, wenn die sekundäre Strömungsverbindung von einem an dem Ventilglied ausgestalteten Dichtsitz und dem weiteren Ventilglied gebildet wird.

Da die Kräftebilanz, einerseits unter der von der Betätigungseinrichtung aufzubringenden Betätigungskraft, andererseits unter der von der Federanordnung aufzubringenden Vorspannkraft und fallweise von der Druckdifferenzkraft zwischen den Fluidanschlüssen der Ventilanordnung bestimmt ist, kann sich hinsichtlich Einfachheit und Einsparung von Einbauraum die Federanordnung an dem Gehäuse der Ventilanordnung abstützen. Der gleiche Vorteil besteht, wenn sich die weitere Federanordnung über das Ventilglied abstützt.

Eine vorteilhafte Alternative ist, wenn das weitere Ventilgiied einstückig mit der Betätigungseinrichtung verbunden ist, wodurch sich Komponenten der Ventilanordnung einsparen bzw. einfacher herstellen lassen. Dabei kann, um die Ventilanordnung noch kompakter zu gestalten, vorgesehen werden, daß die weitere Federanordnung die Betätigungseinrichtung vorspannt, damit das weitere Ventilglied seine erste Stellung einnimmt, wobei die weitere Federanordnung sich an dem Gehäuse der Ventilanordnung abstützt.

### Kurzbeschreibung der Zeichnungen

Die Erfindung und weitere vorteilhafte Ausgestaltungen werden nachfolgend anhand der Zeichnungen erläutert.

Fig. 1 zeigt eine schematische Darstellung einer erfindungsgemäßen blockiergeschützten Fahrzeugbremsanlage.

Fig. 2 zeigt eine Ausführungsform einer Ventilanordnung zur Verwendung in der erfindungsgemäßen blockiergeschützten Fahrzeugbremsanlage nach Fig. 1 im unbetätigten Zustand.

Fig. 3 zeigt eine Ausführungsform einer Ventilanordnung zur Verwendung in der erfindungsgemäßen blockiergeschützten Fahrzeugbremsanlage nach Fig. 1 im betätigten Zustand.

### Detaillierte Beschreibung des Ausführungsbeispiels

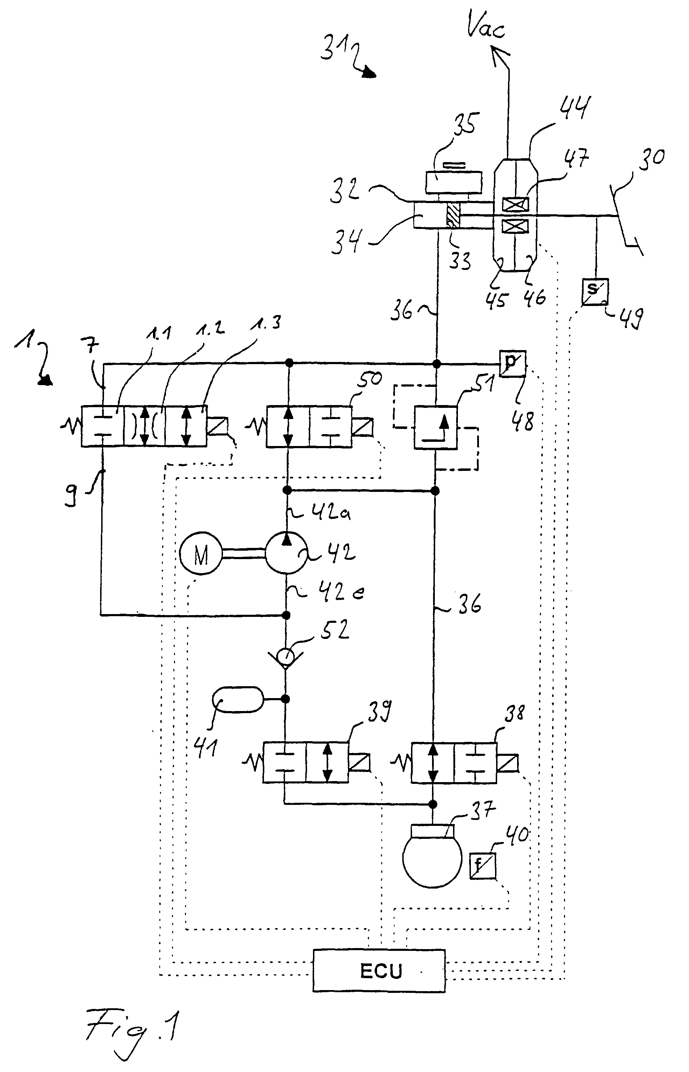

In Fig. 1 ist eine erfindungsgemäße blockiergeschützte Bremsanlage für Kraftfahrzeuge schematisch dargestellt. Ein Bremspedal 30 dient dazu über ein Betätigungselement eine Bremsdruckgebereinheit 31 zu betätigen. Die Bremsdruckgebereinheit 31 weist einen Bremszylinder 32 auf, in dem ein Kolben 33 eine Druckkammer 34 bildet. Die Druckkammer 34 wird von einem Reservoir 35 mit Bremsfluid gespeist. Von der Druckkammer 34 führt eine Bremsleitung 36 zu einer Radbremse 37 des Kraftfahrzeugs.

In der Bremsleitung 36 ist eine Ventileinrichtung 38, 39 zwischen der Bremsdruckgebereinheit 31 und der Radbremse 37 angeordnet. Die Ventileinrichtung 38, 39 ist aus zwei Elektromagnetventilen gebildet, die jeweils durch eine elektronische Steuereinheit ECU angesteuert werden, um den Druck in der Radbremse 37 zu modulieren. Dazu erfaßt die elektronische Steuereinheit ECU über einen Sensor 40 das Drehverhalten des der Radbremse 37 zugeordneten Fahrzeugrades, um durch entsprechende Ansteuerung der Elektromagnetventile 38, 39 Druckaufbau-, Druckabbau- sowie Druckhaltephasen einzustellen.

Im elektrisch unbetätigten Zustand nimmt das erste Elektromagnetventil 38 seine geöffnete Stellung und das zweite Elektromagnetventil 39 seine gesperrte Stellung ein, um in der Radbremse 37 Druck aufbauen zu können. Wenn nur das erste Elektromagnetventil 38 betätigt wird, geht das erste Elektromagnetventil 38 in seine abgesperrte Stellung und das zweite Elektromagnetventil 39 bleibt in seiner gesperrten Stellung, so daß der Druck in der Radbremse 37 konstant gehalten wird. Werden sowohl das erste und das zweite Elektromagnetventil 38, 39 betätigt, geht das erste Elektromagnetventil 38 in seine gesperrte Stellung und das zweite Elektromagnetventil 39 in seine geöffnete Stellung. In diesem Fall kann Bremsfluid aus der Radbremse 37 über das zweite Elektromagnetventil 39 in einen Zwischenspeicher 41 abfließen. Über eine Hydraulikpumpe 42 wird das in dem Zwischenspeicher 41 befindliche Bremsfluid in die Bremsleitung 36 zurückgefördert. Die Hydraulikpumpe 42 wird durch einen Elektromotor M angetrieben, der ebenfalls von der elektronischen Steuereinheit ECU angesteuert wird. Die Ventileinrichtung 38, 39 kann auch mit einem mechanischen Mengenregelventil anstelle des ersten Elektromagnetventils 38 oder mit einem elektromagnetisch betätigtem Drei-Stellungs-Zwei-Wege- oder Drei-Stellungs-Drei-Wege-Ventil anstelle der beiden Elektromagnetventile 38, 39 ausgestaltet sein.

Die Bremsdruckgebereinheit 31 weist zur Verstärkung der über das Bremspedal 30 eingeleiteten Betätigungskraft einen pneumatischen Bremskraftverstärker 44 auf. Eine bewegliche Wand unterteilt den pneumatischen Bremskraftverstärker 44 in eine Unterdruckkammer 45 und eine Druckkammer 46. Zur Erzeugung des Unterdrucks ist die Unterdruckkammer 45 an eine nicht näher dargestellte Unterdruckquelle Vac angeschlossen. Bei einem mit einem Ottomotor ausgerüsteten Kraftfahrzeug steht das im Ansaugrohr prinzipbedingt erzeugte Vakuum als Unterdruckquelle Vac zur Verfügung. Dagegen ist bei einem mit einem Diesel- oder Elektromotor angetriebenen Kraftfahrzeug eine zusätzliche Vakuumpumpe als Unterdruckquelle Vac notwendig. Bei einer Betätigung des Bremspedals 30 funktioniert der Bremskraftverstärkers 44 in bekannter Weise dadurch, daß die Druckkammer 46 mit Atmosphärendruck beaufschlagt wird, so daß an der beweglichen Wand eine Druckdifferenz wirkt, die die am Bremspedal 30 eingeleitete Betätigungskraft unterstützt. Im unbetätigten Zustand sind die Unterdruckkammer 45 und die Druckkammer 46 miteinander verbunden und somit druckausgeglichen, so daß an der beweglichen Wand keine Druckdifferenz wirksam ist.

Der Bremskraftverstärker 44 kann über eine Elektromagnetanordnung 47 auch elektrisch steuerbar sein. Die Elektromagnetanordnung 47 betätigt ein hier nicht näher dargestelltes Steuerventil, um den Bremskraftverstärker 44 in unterschiedliche Steuerstellungen zu bringen. Erstens in eine erste sogenannte Aufbaustellung, in der die Verbindung der Unterdruckkammer 45 mit der Druckkammer 46 gesperrt und die Verbindung der Druckkammer 46 zur Atmosphäre geöffnet ist, so daß an der beweglichen Wand eine Druckdifferenz aufgebaut bzw. erhöht wird. Oder zweitens in in eine zweite sogenannte Haltestellung, in der die Verbindung der Unterdruckkammer 45 mit der Druckkammer 46 und die Verbindung der Druckkammer 46 zur Atmösphäre gesperrt ist, so daß eine an der beweglichen Wand wirkende Druckdifferenz aufrechterhalten wird. Oder drittens in eine dritte sogenannte Abbaustellung, in der die Verbindung der Unterdruckkammer 45 mit der Druckkammer 46 geöffnet und die Verbindung der Druckkammer 46 zur Atmosphäre gesperrt ist, so daß über einen Druckausgleichsvorgang eine an der beweglichen Wand wirkende Druckdifferenz abgebaut wird. Um das Steuerventil in die unterschiedlichen Steuerstellungen zu bringen, bestromt die elektronische Steuereinheit ECU die Elektromagnetanordnung 47 mit einem Strom in der Weise, daß die Einstellung der vorgenannten Steuerstellungen beispielsweise durch Pulsweitenmodulation des Stromsignals erfolgt. Der in der Druckkammer 46 erzeugte und in die Bremsleitung 36 eingeleitete Bremsdruck wird mittels eines Sensors 48 erfaßt und an die elektronische Steuereinheit ECU weitergeleitet, um den Bremsdruck in Abhängigkeit von einem gewünschten Druckwert und/oder Druckverlauf zu regeln.

Die elektrische Steuerbarkeit des Bremskraftverstärkers 44 ermöglicht es Bremsvorgänge auch automatisch, also unabhängig von einer Betätigung des Bremspedals 30 auszuführen, was beispielsweise bei Ausführung einer Abstandsregelung der Fall ist. Eine Sensoreinrichtung 49 ist vorgesehen, um mit der Betätigung des Bremspedals 30 in Beziehung stehende Größen (Pedalweg, Pedalkraft, Pedalbetätigungsgeschwindigkeit) zur Auswertung in der elektronischen Steuereinheit ECU zu erfassen, um auch Bremsungen in Notsituationen, beispielsweise mit der Überschreitung einer bestimmten Pedalbetätigungsgeschwindigkeit als Kriterium, auszuführen.

Die in Fig. 1 gezeigte blockiergeschützte Bremsanlage ist insbesondere auch zur Antriebsschlupf- sowie Fahrdynamikregelung eingerichtet, bei der die Ventilanordnung gemäß den Fig. 2, 3 zur Verwendung kommt. Der erste Fluidanschluß 7 der Ventilanordnung 1 ist an die Bremsdruckgebereinheit 31 und der zweite Fluidanschluß 9 der Ventilanordnung 1 ist an die Eingangsseite 42e der Pumpe 42 angeschlossen. Hierbei ist die erfindungsgemäße Ventilanordnung 1 elektromagnetisch betätigbar ausgeführt und wird von der elektronischen Steuereinheit ECU angesteuert. Dazu ist, wie bekannt und daher nicht dargestellt, die Betätigungseinrichtung 17 mit einem Anker betrieblich gekoppelt, der mit einer Elektromagnetanordnung zusammenwirkt.

Parallel zu der Ventilanordnung 1 ist in der Bremsleitung 36 zwischen der Bremsdruckgebereinheit 31 und der Ausgangsseite 42a der Pumpe 42 ein von der elektronischen Steuereinheit ECU angesteuertes Elektromagnetventil 50 angeordnet, das im unbetätigten Zustand die Verbindung zwischen der Bremsdruckgebereinheit 31 und der Radbremse 37 herstellt und diese im betätigten Zustand sperrt, so daß die Ausgangsseite 42a der Pumpe 42 nur mit der Radbremse 37 in Verbindung steht. Die Ventilanordnung 1 und das Elektromagnetventil 50 werden (nahezu) zeitgleich von der elektronischen Steuereinheit ECU angesteuert, um die Bremsdruckgebereinheit 31 entweder mit der Radbremse 37 oder der Saugseite 42e der Pumpe 42 zu verbinden. Zu dem Elektromagnetventil 50 ist ein Druckbegrenzungsventil 51 parallel geschaltet, das bei Überschreitung eines bestimmten Druckwertes in der Radbremse 37 bzw. an der Ausgangsseite 42a der Pumpe 42 eine Verbindung von der Radbremse 37 bzw. der Ausgangsseite 42a der Pumpe 42 zu der Bremsdruckgebereinheit 31 herstellt, um Beschädigungen an der Bremsanlage zu vermeiden.

Ein Rückschlagventil 52 ist zwischen dem Zwischenspeicher 41 und der Eingangsseite 42e der Pumpe 42 angeordnet, so daß eine Strömungsverbindung nur in Richtung von dem Zwischenspeicher 41 zu der Saugseite 42e der Pumpe 42 herstellbar ist. Damit wird verhindert, daß bei einer Vorladung der Eingangsseite 42e der Pumpe 42, wozu die Ventilanordnung 1 betätigt ist, Bremsfluid in den Zwischenspeicher 41 entweichen kann.

Bei einer Antriebsschlupfregelung, also wenn die elektronische Steuereinheit ECU eine Durchdrehtendenz des der Radbremse 37 zugeordneten Rades feststellt, werden die Ventilanordnung 1 und das Elektromagnetventil 50 betätigt. Da bei einer Antriebsschlupfregelung eine Betätigung des Bremspedals 30 nicht erfolgt, kann die Pumpe 42 Bremsfluid aus dem Reservoir 35 über die Druckkammer 34 und die Ventilanordnung 1 entnehmen und, da das Elektromagentventil 50 die Verbindung zur Bremsdruckgebereinheit 31 sperrt, mit diesem Bremsfluid unmittelbar die Radbremse 37 beaufschlagen, um der Durchdrehtendenz entgegenzuwirken. Vorteilhaft ist hierbei, daß die erfindungsgemäße Ventilanordnung 1 einen verhältnismäßig großen Strömungsquerschnitt freigibt, so daß die Pumpe 13 insbesondere bei tiefen Temperaturen einen ausreichend großen Volumenstrom fördern kann.

Demgegenüber wird bei einer Fahrdynamikregelung, bei der die Fahrzeugstabilität inbesondere beim Fahren in einer Kurve durch automatisches Bremsen verbessert wird, zusätzlich die Eingangsseite 42e der Pumpe 42 mit einem von der Bremsdruckgebereinheit 31 erzeugten Bremdruck vorgeladen, um einen sehr schnellen Druckaufbau in der Radbremse 37 zu erzielen. Dies geschieht durch automatische Ansteuerung des Bremskraftverstärkers 44, wozu in der Druckkammer 34 der Bremsdruckgebereinheit 31 ein Druck in der Größenordnung von 5 bis 30 bar eingestellt wird, was unter anderem von der Beschaffenheit der Oberfläche der Fahrbahn abhängig ist. Durch das Vorladen der Pumpe 42 über deren Saugseite 42e wird erreicht, daß bereits während der Anlaufphase an der Ausgangsseite 42a der Pumpe 42 ein ausreichendender Druck zur Verfügung steht. Aufgrund der erfindungsgemäßen Ausgestaltung der Ventilanordnung 1 ergeben sich hierbei keinerlei Nachteile, wenn die Ventilanordnung 1 gegen den von der Bremsdruckgebereinheit 31 erzeugten Druck betätigt wird. Auch ergeben sich erfindungsgemäß keine Einschränkungen bei der Bemessung des Strömungsquerschnitts der Ventilanordnung 1, so daß insbesondere das sehr gute Tieftemperaturverhalten aufrechterhalten bleibt.

Es versteht sich, daß die vorbeschriebene Vorladung der Pumpe 42 gleichfalls bei einer Antriebsschlupfregelung anwendbar ist. Ebenso versteht es sich, daß bei Einsatz einer besonders saugstark ausgebildeten Pumpe keine Vorladung wie vorstehend unter Einsatz des elektrisch steuerbaren Bremskraftverstärkers beschrieben, notwendig ist, also ein elektrisch steuerbarer Bremskraftverstärker nicht notwendigerweise erforderlich ist.

In Fig. 2 und 3 ist eine Ausführungsform der Ventilanordnung 1 jeweils in einem Längsschnitt gezeigt. Der Aufbau der Ventilanordnung 1 ist im wesentlichen rotationssymetrisch in Bezug auf eine Längsachse L.

Die Ventilanordnung 1 ist als 2-Anschluß-/3-Stellungsventil ausgestaltet, bei dem in einer unbetätigten (Grund-) Stellung 1.1 (siehe Fig. 1) die Verbindung zwischen den Fluidanschlüssen 7 und 9 der Ventilanordnung gesperrt ist. In einer ersten Betätigungsstellung 1.2 (siehe Fig. 1) wird eine sekundäre Strömungsverbindung B zwischen den Fluidanschlüssen 7 und 9 der Ventilanordnung hergestellt. In einer zweiten Betätigungsstellung 1.3 (siehe Fig. 1) wird eine primäre Strömungsverbindung A zwischen zwischen den Fluidanschlüssen 7 und 9 der Ventilanordnung 1 hergestellt. Dabei hat die primäre Strömungsverbindung A einen größeren Strömungsquerschnitt als die sekundäre Strömungsverbindung B (siehe Fig. 3). Die Ventilanordnung 1 hat ein erstes Ventilglied 3, das durch eine Federanordnung 4 in die Grundstellung 1.1 vorgespannt ist. Des weiteren ist eine erste Betätigungseinrichtung 17 vorgesehen, um das Ventilglied 3 in die erste Betätigungsstellung 1.2 zu bringen. Schließlich ist ein weiteres Ventilglied 11 vorgesehen, das durch eine weitere Federanordnung 12 in die Grundstellung 1.1 vorgespannt ist. Eine weitere Betätigungseinrichtung dient dazu, das weitere Ventilglied 11 in die zweite Betätigungsstellung 1.3 zu bringen, so daß bei einer Betätigung der Ventilanordnung 1 zuerst nur die sekundäre Strömungsverbindung B und anschließend die primäre Strömungsverbindung A besteht. Wie dies im einzelnen erreicht wird, ist nachstehend erläutert.

Die Ventilanordnung 1 besteht aus einem Gehäuse 2, in dem ein Ventilglied 3 und eine Federanordnung 4 koaxial zu der Längsachse L aufgenommen sind. In dem Gehäuse 2 ist radial zu der Längsachse L ein Dichtsitz 5 ausgestaltet, mit dem das Ventilglied 3 derart zusammenwirkt, daß das Ventilglied 3 unter Krafteinwirkung der Federanordnung 4 gegen den Dichtsitz 5 dichtend vorgespannt ist, wie in Fig. 2 gezeigt. Dadurch werden eine erste Druckkammer 6, der ein erster Fluidanschluß 7 zugeordnet ist, und eine zweite Druckkammer 8, der ein zweiter Fluidanschluß 9 zugeordnet ist, gebildet. Zur Vorspannung des Ventilglieds 3 stützt sich die Federanordnung 4 über das Gehäuse 2 ab. Um die erste Druckkammer 6 zu verschließen, ist ein Verschlußteil 10 vorgesehen, das dichtend mit dem Gehäuse 2 verbunden ist, und an dem die Federanordnung 4 anliegt. Auch weist das Verschlußteil 10 eine zapfenförmige Einziehung zur Aufnahme der Federanordnung 4 auf, um für die Federanordnung 4 eine zu der Längsachse L axiale (innere) Führung bereitzustellen.

Das Ventilglied 3 ist domförmig ausgebildet, um auf seiner der ersten Druckkammer 6 zugewandten Seite ein weiteres Ventilglied 11, das kugelförmig ausgebildet ist, und eine weitere Federanordnung 12 koaxial zu der Längsachse L aufzunehmen. Das Ventilglied 3 weist koaxial zu der Längsachse L eine Zentralbohrung 13 auf. Auf der der ersten Druckkammer 6 zugewandten Seite der Zentralbohrung 13 ist an dem Ventilglied 3 radial zu der Längsachse L ein Dichtsitz 14 ausgestaltet, mit dem das weitere Ventilglied 11 derart zusammenwirkt, daß das weitere Ventilglied 11 unter Krafteinwirkung der weiteren Federanordnung 12 gegen den Dichtsitz 14 dichtend vorgespannt ist, so daß die erste und die zweite Druckkammer 6, 8 gegeneinander gesperrt sind, wie in Fig. 2 gezeigt. Dabei stützt sich zur Vorspannung des weiteren Ventilglieds 11 die weitere Federanordnung 12 über das Ventilglied 3 ab, wobei die weitere Federanordnung an einem Fluiddurchlässe aufweisenden Halteteil 15 anliegt, das kraftschlüssig mit dem Ventilglied 3, zum Beispiel über eine Preßpassung, verbunden ist. Da sich das Ventilglied 3 über die Federanordnung 4 an dem Gehäuse 2 abstützt, stützt sich die weitere Federanordnung 12 mittelbar an dem Gehäuse 2 ab, so daß das Halteteil 15 auch lose mit dem Ventilglied 3 verbunden sein kann. Das Halteteil 15 liegt zwischen dem Ventilglied 3 und der Federanordnung 4, und weist einen äußeren Rand auf, der die Federanordnung 4 radial umgreift, um somit für die Federanordnung 4 auch eine zu der Längsachse L axiale (äußere) Führung bereitzustellen.

Um eine sichere Funktion der Ventilanordnung 1 zu gewährleisten, ist eine paßgenaue und gleitreibungsarme axiale Führung des Ventilglieds 3 wichtig. Dazu kann einerseits das Ventilglied 3 in der Bohrung 16 des Gehäuses 2 unmittelbar geführt sein, andererseits kann die axiale Führung in der Bohrung 16 des Gehäuses 2 über den äußeren Rand des mit dem Ventilglied 3 verbundenen Halteteils 15 besorgt werden.

Zur Betätigung der Ventilanordnung 1 ist in dem Gehäuse 2 eine Betätigungseinrichtung 17 koaxial zu der Längsachse L aufgenommen. Die Betätigungseinrichtung 17 ist auf der dem Ventilglied 3 zugewandten Seite als stufenförmiger Stößel 18, 19 ausgebildet. Dabei weist der vordere Stößel 18 einen Durchmesser auf, der kleiner ist als der Durchmesser der Zentralbohrung 13, so daß der vordere Stößel 18 in der Zentralbohrung 13 das Ventilglied 3 durchdringt, um mit dem weiteren Ventilglied 11 zusammenzuwirken. Der Durchmesser des hinteren Stößels 19 ist größer als der Durchmesser der Zentralbohrung 13, so daß der hintere Stößel 19 mit dem Ventilglied 3 zusammenwirkt.

Ebenfalls kann das weitere Ventilglied 11 einstückig mit der Betätigungseinrichtung 17 bzw. dem Stößel 18 oder 19 verbunden sein, so daß die weitere Federanordnung 12 die Betätigungseinrichtung 17 vorspannen kann, wobei sich die weitere Federanordnung 12 unmittelbar an dem Gehäuse 2 abstützt. Bei dieser Ausführung wird zum einen das Halteteil 15 eingespart, zum anderen ergibt sich ein sehr kompakter Aufbau, da die weitere Federanordnung 12 in der Betätigungseinrichtung 17 integriert ist.

Bei dem in Fig. 2 gezeigten unbetätigten Zustand der Ventilanordnung 1 liegt das Ventilglied 3 unter Krafteinwirkung der Federanordnung 4 an dem Dichtsitz 5 an und das weitere Ventilglied 11 liegt unter Krafteinwirkung der weiteren Federanordnung 12 an dem Dichtsitz 14 an, wodurch die erste Druckkammer 6 bzw. der erste Fluidanschluß 7 gegenüber der zweiten Druckkammmer 8 bzw. dem zweiten Fluidanschluß 9 gesperrt ist. Dabei spannt die weitere Federanordnung 12 über das weitere Ventilglied 11 und über den vorderen Stößel 18 die Betätigungseinrichtung 17 in ihre unbetätigte Stellung vor. Der vordere Stößel 18 ist so bemessen, daß er zum einen mit der Zentralbohrung 13 einen radialen Spalt bildet, und daß zum anderen zwischen dem hinteren Stößel 19 und dem Ventilglied 3 ein axialer Spalt gebildet ist.

Erfolgt nun eine Betätigung der Ventilanordnung 1, wozu die Betätigungseinrichtung 17 axial zur Längsachse L bewegt wird, so hebt der vordere Stößel 18 zunächst das weitere Ventilglied 11 entgegen der Kraft der weiteren Federanordnung 12 von dem Dichtsitz 14 ab, wodurch zwischen der ersten und der zweiten Druckkammer 6, 8 eine sekundäre Strömungsverbindung B hergestellt wird, die sich über den radialen Spalt, den der vordere Stößel 18 in der Zentralbohrung 13 bildet, sowie über den axialen Spalt, der zwischen dem Ventilglied 3 und dem hinteren Stößel 19 besteht, erstreckt. Da der radiale Spalt S_{R} und der axiale Spalt verhältnismäßig groß bemessen sind, ist der wirksame Strömungsquerschnitt der sekundären Strömungsverbindung B effektiv durch den ringspaltförmigen Durchlaß zwischen dem weiteren Ventilglied 11 und dem Dichtsitz 14 bestimmt.

Wird nunmehr bei Betätigung der Ventilanordnung 1 die Betätigungseinrichtung 17 weiter axial zur längsachse L bewegt, so kommt nach Überschreitung des Masses des axialen Spaltes der hintere Stößel 19 an dem Ventilglied 3 zur Anlage, so daß dieses entgegen der Kraft der Federanordnung 4 von dem Dichtsitz 5 abgehoben wird, so daß eine primäre Strömungsverbindung A zwischen der ersten und der zweiten Druckkammer 6, 8 hergestellt wird, wobei der wirksame Strömungsquerschnitt der primären Strömungsverbindung A effektiv durch den ringspaltförmigen Durchlaß zwischen dem Ventilglied 3 und dem Dichtsitz 5 bestimmt ist. Dieser betätigte Zustand ist in Fig. 3 gezeigt. Da der Strömungsquerschnitt der sekundären Strömungsverbindung B im Vergleich zu dem Strömungsquerschnitt der primären Strömungsverbindung A vernachlässigbar ist, macht es keinen bedeutenden Unterschied, ob bei bestehender primären Strömungsverbindung A die sekundäre Strömungsverbindung B aufrechterhalten oder abgesperrt wird. Denn so kann die sekundäre Strömungsverbindung B bei Anliegen des hinteren Stößels 19 an dem Ventilglied 3 gesperrt oder durch geeignete Ausgestaltung des vorderen bzw. hinteren Stößels 18, 19 beispielsweise mit Querbohrungen aufrechterhalten werden.

Damit die sekundäre Strömungsverbindung B (zeitlich) vor der primären Strömungsverbindung A in der zuvor erläuterten Weise hergestellt wird, ist die Vorspannkraft der weiteren Federanordnung 12 kleiner als die Vorspannkraft der Federanordnung 4. Desweiteren ist der wirksame Strömungsquerschnitt der sekundären Strömungsverbindung B erheblich kleiner als der wirksame Strömungsquerschnitt der primären Strömungsverbindung A, da der ringspaltförmige Durchlaß zwischen dem Ventilglied 3 und dem Dichtsitz 5 aufgrund der zuvor erläuterten radialgeometrischen Anordnung größer ist als der ringspaltförmige Durchlaß zwischen dem weiteren Ventilglied 11 und dem Dichtsitz 14. Aufgrund dieser Dimensionierung der Ventilanordnung 1 ist seitens der Betätigungseinrichtung 17 zur Herstellung der sekundären Strömungsverbindung B nur eine verhältnismäßig geringe Betätigungskraft aufzubringen. Denn kraftmäßig ist zunächst nur die geringe Vorspannkraft der weiteren Federanordnung 12 und erst anschließend die Vorspannkraft der Federanordnung 4 zu überkommen.

In dem Fall, daß in der ersten Druckkammer 6 bzw. am ersten Fluidanschluß 7 ein höherer Druck als in der zweiten Druckkammer 8 bzw. am zweiten Fluidanschluß 9 ansteht, ist zunächst zusätzlich zu der Vorspannkraft der weiteren Federanordnung 12 eine Druckdifferenzkraft zu überkommen, die aber wegen des sehr kleinen wirksamen Strömungsquerschnitts der sekundären Strömungsverbindung B ebenfalls gering ist, so daß die aufzubringende Betätigungskraft gering bleibt. Allerdings findet über die sekundäre Strömungsverbindung B ein Druckausgleichsvorgang zwischen der ersten und der zweiten Druckkammer 6, 8 statt, wodurch die Druckdifferenzkraft (nahezu) vollständig abgebaut wird, so daß anschließend bei Herstellung der primären Strömungsverbindung A nur noch die Vorspannkraft der Federanordnung 4 zu überkommen ist. Würde entgegen dem die Druckdifferenz zwischen der ersten und der zweiten Druckkammer 6, 8 bei Herstellung der primären Strömungsverbindung A nach wie vor bestehen, so wäre aufgrund des sehr großen wirksamen Strömungsquerschnitts der primären Strömungsverbindung A zusätzlich eine sehr hohe Druckdifferenzkraft zu überkommen, was eine erhebliche Erhöhung der aufzubringenden Betätigungskraft zur Folge hätte.

Insgesamt ist zu der erfindungsgemäßen Ventilanordnung 1 also festzustellen, daß zwischen dem ersten und zweiten Fluidanschluß 7, 9 eine Strömungsverbindung mit einem sehr großen wirksamen Strömungsquerschnitt herstellbar ist, wobei im Verhältnis dazu die aufzubringende Betätigungskraft sehr gering ist.

Des weiteren wird bei Betätigung der Ventilanordnung 1 durch Einstellen der Betätigungskraft - über die Bestromung der hier nicht näher dargestellten elektromagnetischen Betätigungsrichtung - wahlweise entweder die primäre A oder sekundäre B Strömungsverbindung angewählt bzw. eingestellt. Dies ermöglicht zum Beispiel bei einer pulsweitenmoduliert gesteuerten Bestromung eine sehr präzise Einstellung des Druckniveaus an der Eingangs- bzw. Ausgangsseite der Pumpe 42.

## Patentansprüche

1. Blockiergeschützte Bremsanlage, die insbesondere zur Antriebsschlupf- sowie zur Fahrdynamikregelung eingerichtet ist mit
einer Pumpe (42) zum Betätigen einer Radbremse (37), die Bremsfluid von einer Bremsdruckgebereinheit (31) entnimmt und der Radbremse (37) zuführt, und
einer Ventilanordnung (1), die
- zwischen der Bremsdruckgebereinheit (31) und einem Eingangsanschluß (42e) der Pumpe (42) angeordnet ist und die als 2-Anschluß-/3-Stellungsventil ausgestaltet ist, das
- in einer unbetätigten Grundstellung (1.1) die Verbindung zwischen der Bremsdruckgebereinheit (31) und dem Eingangsanschluß (42e) der Pumpe (42) sperrt, das
- in einer ersten Betätigungsstellung (1.2) eine sekundäre Strömungsverbindung (B) zwischen der Bremsdruckgebereinheit (31) und dem Eingangsanschluß (42e) der Pumpe (42) herstellt, und das
- in einer zweiten Betätigungsstellung (1.3) eine primäre Strömungsverbindung (A) zwischen der Bremsdruckgebereinheit (31) und dem Eingangsanschluß (42e) der Pumpe (42) herstellt, wobei
- die primäre Strömungsverbindung (A) einen größeren Strömungsquerschnitt aufweist als die sekundäre Strömungsverbindung (B) und
- bei jeder Betätigung der Ventilanordnung (1) zuerst nur die sekundäre Strömungsverbindung (B) und anschließend die primäre Strömungsverbindung (A) besteht,
**dadurch gekennzeichnet, daß** nach einer solchen Betätigung der Ventilanordnung (1) diese durch Einstellen der Betätigungskraft wahlweise entweder in die primäre (A) oder in die sekundäre (B) Strömungsverbindung einstellbar ist.

2. Blockiergeschützte Bremsanlage nach Anspruch 1, **dadurch gekennzeichnet, daß**
- die Ventilanordnung (1) ein erstes Ventilglied (3) aufweist, das durch eine erste Federanordnung (4) in die Grundstellung (1.1) vorgespannt ist, daß
- eine erste Betätigungseinrichtung (17) vorgesehen ist, um das erste Ventilglied (3) in die erste Betätigungsstellung (1.2) zu bringen, und daß
- ein weiteres Ventilglied (11) vorgesehen ist, das durch eine weitere Federanordnung (12) in die Grundstellung (1.1) vorgespannt ist, und durch eine weitere Betätigungseinrichtung in die zweite Betätigungsstellung (1.3) bringbar ist.

3. Blockiergeschützte Bremsanlage nach Anspruch 2, **dadurch gekennzeichnet, daß**
- die erste Betätigungseinrichtung (17) und/oder die weitere Betätigungseinrichtung elektromagnetisch und/oder hydraulisch gesteuert werden.

4. Blockiergeschützte Bremsanlage nach Anspruch 2, **dadurch gekennzeichnet, daß**
- das erste Ventilglied (3) und das weitere Ventilglied (11) durch eine gemeinsame Betätigungseinrichtung (17) betätigt werden.

5. Blockiergeschützte Bremsanlage nach einem der Ansprüche 2 bis 4, **dadurch gekennzeichnet, daß**
- das erste Ventilglied (3) domförmig und das weitere Ventilglied (11) kugelförmig ausgebildet ist, wobei das weitere Ventilglied (11) innerhalb des ersten Ventilglieds (3) angeordnet ist.

6. Blockiergeschützte Bremsanlage nach einem der Ansprüche 2 bis 5, **dadurch gekennzeichnet, daß**
- die Vorspannkraft der ersten Federanordnung (4) größer ist als die Vorspannkraft der weiteren Federanordnung (12).

7. Blockiergeschützte Bremsanlage nach einem der Ansprüche 2 bis 6, **dadurch gekennzeichnet, daß**
- die primäre Strömungsverbindung (A) durch einen am Gehäuse (2) der Ventilanordnung (1) ausgestalteten Dichtsitz (5) und das erste Ventilglied (3) definiert wird.

8. Blockiergeschützte Bremsanlage nach einem der Ansprüche 2 bis 7, **dadurch gekennzeichnet, daß**
- die sekundäre Strömungsverbindung (B) durch einen an dem ersten Ventilglied (3) ausgestalteten Dichtsitz (14) und das weitere Ventilglied (11) definiert wird.

9. Blockiergeschützte Bremsanlage nach einem der Ansprüche 2 bis 8, **dadurch gekennzeichnet, daß**
- die erste Federanordnung (4) sich an dem Gehäuse (2) der Ventilanordnung (1) abstützt.

10. Blockiergeschützte Bremsanlage nach wenigstens einem der Ansprüche 2 bis 9, **dadurch gekennzeichnet, daß**
- die weitere Federanordnung (12) sich über das erste Ventilglied (3) abstützt.

11. Blockiergeschützte Bremsanlage nach Anspruch 4, **dadurch gekennzeichnet, daß**
- das weitere Ventilglied (11) einstückig mit der gemeinsamen Betätigungseinrichtung (17) verbunden ist.

12. Blockiergeschützte Bremsanlage nach Anspruch 11, **dadurch gekennzeichnet, daß**
- die weitere Federanordnung (12) die Betätigungseinrichtung (17) vorspannt, damit das weitere Ventilglied (11) seine Grundstellung (1.1) einnimmt, wobei die weitere Federanordnung (12) sich an dem Gehäuse (2) der Ventilanordnung (1) abstützt.

## Claims

1. An anti-locking brake system, which is set up in particular for traction control and vehicle dynamics control, comprising
a pump (42) for actuating a wheel brake (37), which pump removes brake fluid from a brake pressure generating unit (31) and supplies it to the wheel brake (37), and
a valve arrangement (1), which
- is disposed between the brake pressure generating unit (31) and an input connection (42e) of the pump (42) and takes the form of a 2-connection/3-position valve, which
- in a non-actuated normal position (1.1) blocks the connection between the brake pressure generating unit (31) and the input connection (42e) of the pump (42),
- in a first actuating position (1.2) establishes a secondary flow connection (B) between the brake pressure generating unit (31) and the input connection (42e) of the pump (42), and
- in a second actuating position (1.3) establishes a primary flow connection (A) between the brake pressure generating unit (31) and the input connection (42e) of the pump (42), wherein
- the primary flow connection (A) has a larger flow cross section than the secondary flow connection (B) and
- upon each actuation of the valve arrangement (1) there is initially only the secondary flow connection (B) and then the primary flow connection (A), **characterised in that** after such an actuation of the valve arrangement (1), it is selectively adjustable either into the primary (A) or into the secondary (B) flow connection by adjustment of the actuating force.

2. The anti-locking brake system according to claim 1, **characterised in that**
- the valve arrangement (1) comprises a first valve element (3), which is biased into the normal position (1.1) by a first spring arrangement (4), that
- a first actuating device (17) is provided for setting the first valve element (3) to the first actuating position (1.2), and that
- a further valve element (11) is provided which is biased into the normal position (1.1) by a further spring arrangement (12), and is adapted to be set to the second actuating position (1.3) by a further actuating device.

3. The anti-locking brake system according to claim 2, **characterised in that**
- the first actuating device (17) and/or the further actuating device are/is electromagnetically and/or hydraulically controlled.

4. The anti-locking brake system according to claim 2, **characterised in that**
- the first valve element (3) and the further valve element (11) are actuated by a common actuating device (17).

5. The anti-locking brake system according to one of claims 2 to 4, **characterised in that**
- the first valve element (3) is dome-shaped and the further valve element (11) is spherical, the further valve element (11) being disposed inside the first valve element (3).

6. The anti-locking brake system according to one of claims 2 to 5, **characterised in that**
- the bias force of the first spring arrangement (4) is greater than the bias force of the further spring arrangement (12).

7. The anti-locking brake system according to one of claims 2 to 6, **characterised in that**
- the primary flow connection (A) is defined by a sealing seat (5) formed on the housing (2) of the valve arrangement (1) and by the first valve element (3).

8. The anti-locking brake system according to one of claims 2 to 7, **characterised in that**
- the secondary flow connection (B) is defined by a sealing seat (14) formed on the first valve element (3) and by the further valve element (11).

9. The anti-locking brake system according to one of claims 2 to 8, **characterised in that**
- the first spring arrangement (4) is supported against the housing (2) of the valve arrangement (1).

10. The anti-locking brake system according to at least one of claims 2 to 9, **characterised in that**
- the further spring arrangement (12) is supported via the first valve element (3).

11. The anti-locking brake system according to claim 4, **characterised in that**
- the further valve element (11) is integrally connected to the common actuating device (17).

12. The anti-locking brake system according to claim 11, **characterised in that**
- the further spring arrangement (12) biases the actuating device (17) so that the further valve element (11) occupies its normal position (1.1), the further spring arrangement (12) being supported against the housing (2) of the valve arrangement (1).

## Revendications

1. Système de freinage antiblocage, agencé en particulier pour la régulation du glissement d'entraînement et de la dynamique de mouvement, comportant
une pompe (42) pour l'actionnement d'un frein de roue (37), qui prélève du liquide de freinage dans une unité distributrice de pression de freinage (31) et alimente le frein de roue (37), et
un dispositif de soupape (1), qui
- est placé entre l'unité distributrice de pression de freinage (31) et un raccord d'entrée (42e) de la pompe (42) et qui est conçu comme soupape à 2 raccords/3 positions, qui
- dans une position de base de repos (1.1), interrompt la liaison entre l'unité distributrice de pression de freinage (31) et le raccord d'entrée (42e) de la pompe (42), qui
- dans une première position d'actionnement (1.2), établit une liaison d'écoulement secondaire (B) entre l'unité distributrice de pression de freinage (31) et le raccord d'entrée (42e) de la pompe (42), et qui
- dans une deuxième position d'actionnement (1.3), établit une liaison d'écoulement primaire (A) entre l'unité distributrice de pression de freinage (31) et le raccord d'entrée (42e) de la pompe (42),
- la liaison d'écoulement primaire (A) présentant une section transversale d'écoulement plus grande que la liaison d'écoulement secondaire (B) et
- lors de chaque actionnement du dispositif de soupape (1), c'est d'abord uniquement la liaison d'écoulement secondaire (B) qui est établie, et ensuite la liaison d'écoulement primaire (A),
**caractérisé en ce que**, après un tel actionnement du dispositif de soupape (1), celui-ci peut être réglé par réglage de la force d'actionnement au choix soit dans la liaison d'écoulement primaire (A), soit dans la liaison d'écoulement secondaire (B).

2. Système de freinage antiblocage, selon la revendication 1, **caractérisé en ce que**
- le dispositif de soupape (1), comprend une premier élément de soupape (3), qui est précontraint par un premier dispositif à ressort (4) dans la position de base (1.1), **en ce que**
- un premier dispositif d'actionnement (17) est prévu, pour amener le premier élément de soupape (3) dans la première position d'actionnement (1.2), et **en ce que**
- un autre élément de soupape (11) est prévu, qui est précontraint par un autre dispositif à ressort (12) dans la position de base (1.1), et peut être amené dans la deuxième position d'actionnement (1.3) par un autre dispositif d'actionnement.

3. Système de freinage antiblocage, selon la revendication 2, **caractérisé en ce que**
- le premier dispositif d'actionnement (17) et/ou l'autre dispositif d'actionnement sont commandés par action électromagnétique et/ou hydraulique.

4. Système de freinage antiblocage, selon la revendication 2, **caractérisé en ce que**
- le premier élément de soupape (3) et/ou l'autre élément de soupape (11) sont actionnés par un dispositif d'actionnement commun (17).

5. Système de freinage antiblocage, selon l'une des revendications 2 à 4, **caractérisé en ce que**
- le premier élément de soupape (3) a la forme d'un dôme et l'autre élément de soupape (11) a une forme sphérique, l'autre élément de soupape (11) étant placé à l'intérieur du premier élément de soupape (3).

6. Système de freinage antiblocage, selon l'une des revendications 2 à 5, **caractérisé en ce que**
- la force de précontrainte du premier dispositif à ressort (4) est supérieure à la force de précontrainte de l'autre dispositif à ressort (12).

7. Système de freinage antiblocage, selon l'une des revendications 2 à 6, **caractérisé en ce que**
- la liaison d'écoulement primaire (A) est définie par un siège d'étanchéité (5) formé sur le carter (2) du dispositif de soupape (1) et par le premier élément de soupape (3).

8. Système de freinage antiblocage, selon l'une des revendications 2 à 7, **caractérisé en ce que**
- la liaison d'écoulement secondaire (B) est définie par un siège d'étanchéité (14) formé sur le premier élément de soupape (3) et par l'autre élément de soupape (11).

9. Système de freinage antiblocage, selon l'une des revendications 2 à 8, **caractérisé en ce que**
- le premier dispositif à ressort (4) s'appuie sur le carter (2) du dispositif de soupape (1).

10. Système de freinage antiblocage, selon l'une des revendications 2 à 9, **caractérisé en ce que**
- l'autre dispositif à ressort (12) s'appuie sur le premier élément de soupape (3).

11. Système de freinage antiblocage, selon la revendication 4, **caractérisé en ce que**
- l'autre élément de soupape (11) est relié en formant une seule pièce avec le dispositif d'actionnement commun (17).

12. Système de freinage antiblocage, selon la revendication 11, **caractérisé en ce que**
- l'autre dispositif à ressort (12) précontraint le dispositif d'actionnement (17) afin que l'autre élément de soupape (11) prenne sa position de base (1.1), l'autre dispositif à ressort (12) s'appuyant sur le carter (2) du dispositif de soupape (1).
